# EUROPÄISCHE PATENTSCHRIFT

(11) **EP 1 360 024 B1**
(45) Veröffentlichungstag und Bekanntmachung des Hinweises auf die Patenterteilung: **28.01.2009**
(21) Anmeldenummer: 02714016.9
(22) Anmeldetag: 15.02.2002
(51) Int. Cl.: B23B 29/034

(54) **FEINBOHRKOPF MIT SPIELFREIER RADIALVERSTELLUNG**
FINE DRILL HEAD WITH SLACK-FREE RADIAL DISPLACEMENT
TETE DE PERCAGE DE PRECISION A DEPLACEMENT RADIAL SANS JEU

(30) Priorität: 15.02.2001 DE 10108794
(43) Veröffentlichungstag der Anmeldung: 12.11.2003
(73) Patentinhaber: Johne + Co. Präzisionswerkzeuge GmbH, 46286 Dorsten (DE)
(72) Erfinder: JOHNE, Frank, 01516 Grossenhain-Zschauitz (DE)
(74) Vertreter: Effert, Udo
(86) Internationale Anmeldenummer: PCT/DE2002/000546
(87) Internationale Veröffentlichungsnummer: WO 2002/064294

(56) Entgegenhaltungen:
- EP-A- 0 251 405
- DE-A- 3 332 243
- DE-A- 3 926 026
- US-A- 3 625 625
- US-A- 4 933 868

## Beschreibung

Die Erfindung betrifft einen Werkzeugkopf gemäß dem Oberbegriff des Anspruches 1.

Ein gattungsgemäßer Bohrkopf ist aus der DE 33 32 243 A1 bekannt. In diesem Bohrkopf wird in dessen Werkzeugschaft ein federbelasteter langer Stift mit kegelstumpfförmigem Kopf in Achsrichtung geführt und ist in Achsrichtung verstellbar. Durch axiale Verschiebung des kegelstumpfförmigen Stiftes, der seinerseits gegen einen in dem Kopf der Parallelfeder-Anordnung angeordneten Bolzen drückt, wird dem Werkzeug im Kopf eine der Steigung der Kegelfläche entsprechende geringe Radialbewegung aufgeprägt und somit das Werkzeug radial auswärts oder einwärts verstellt. Diese Vorrichtung hat sich im Einsatz bewährt, jedoch baut der Werkzeugkopf relativ lang und der Werkzeugstahlhalter wird nur durch Flächenreibung in seiner Position fixiert. Außerdem weist dieses Werkzeug sehr viele Teile auf und ist daher relativ teuer und das Werkzeug muß in Kooperation mit dem Maschinenhersteller realisiert werden, wegen der Ansteuerung der Verstelleinrichtung durch Signale von der Maschine. Ein weiterer Nachteil liegt darin, daß bauartbedingt das Kühlmittel durch den Verstellbereich der Stelleinrichtung fließt und damit nicht immer die Stelleinrichtung aufgrund Verschmutzung durch Kühlmittel unter den selben Bedingungen einstellbar ist.

Aus der EP 0 251 405 A1 ist auch eine ähnliche langbauende Anordnung mit einem unsymmetrischen Parallelfedersystem bekannt. Eine Kegelstelleinrichtung oder Kühlmittelversorgung sind nicht offenbart. Das Werkzeug kann offensichtlich für Schneiden-Verstellungen im Bereich von 1/10 mm aber nicht darunter im Bereich von 1/1000 mm genutzt werden.

Aus der DE 39 26 026 A1 ist ein Werkzeugkopf ähnlicher Art bekannt, bei dem eine Parallelfeder-Anordnung gegen einen Grundkörper elastisch auslenkbar ist. In der Parallelfeder-Anordnung ist das Werkzeug aufgenommen und durch eine Vorrichtung, bestehend aus einer Stellschraube mit Kegelteil, das gegen eine komplementäre Fläche an der Parallelfeder-Anordnung unter Vorspannung anliegt, radial verstellbar. Nachteilig ist, daß diese Vorrichtung nur für eine bestimmte Werkzeugausbildung, einen langen Meißel, verwendbar ist, da mit diesem Meißel zugleich rückwärtig eine Unwuchtausgleichsvorrichtung betätigt werden soll, damit bei derartigen Werkzeugen eine hochgenaue Bohrung erzielbar ist. Ein weiterer Nachteil besteht darin, daß das Werkzeug nicht voreingestellt werden kann und Kühlmittel durch den Stellbereich fließt, in dem die Stellschraube liegt und durch die Unwuchtausgleichsvorrichtung.

Von daher liegt der Erfindung, ausgehend vom zuletzt genannten Stand der Technik, das Problem zugrunde, die Nachteile des Standes der Technik zu vermeiden, deren Vorteile jedoch zu nutzen, klein zu bauen mit wenigen Vorrichtungsteilen und diese Teile so anzuordnen, daß Platz für eine Durchführung des Kühlmittelkanals bis zum Werkzeug bleibt. Es soll eine minimale, radiale Einstellung kontrollierbar möglich sein mit einer exakten Fixierung der Einstellposition.
Weitere mit einem Einsatz eines derartigen Werkzeugkopfes zusammenhängende Probleme, mit denen sich die Erfindung befaßt, ergeben sich aus der jeweiligen Erläuterung der aufgezeigten Lösung.

Das Problem wird erfingdungsgemäß gelöst durch die Merkmale des Anspruches 1. Weiterbildungen der Erfindung sind in den Unteransprüchen erfaßt.

Die Lösung bei dem gattungsgemäßen Werkzeugkopf besteht darin, den Kern und die Parallelfeder-Anordnung gemeinsam einstückig und das Kontaktteil in einem vom Kopf in Richtung Maschinenschaft rückspringenden Widerlager auszubilden. Die erforderliche Trennung der Parallelfeder-Anordnung von dem Kern kann durch heute geläufige Methoden mittels Bohrungen und einzusetzenden Erodierwerkzeugen geschehen, um eine schmale Nut für die Beweglichkeit der Parallelfeder auf dem Kern zu erzeugen. Diese Anordnung ist besonders für Werkzeuge geringen Durchmessers gedacht, bei denen außerordentlich feine Verstellungen in Radialrichtung erforderlich sind. Die Verstellung kann bei dem erfindungsgemäßen Werkzeug im Bereich von 1 µm in Radialrichtung, also 2 µm Bohrungsdurchmesser erfolgen.
In einer besonderen bevorzugten Ausführungsform ist auch der Kopf für die Aufnahme des Stahlhalters oder der Werkzeughalterung einstückig mit der Parallelfeder angeordnet, so daß weder ein Spiel auftreten kann noch eine ungewollte Fehlpositionierung des Kopfes auf der Parallelfeder-Anordnung.

Bei der erfindungsgemäßen Lösung kann das Kontaktteil als positionierbare, voreinstellbare Schraube mit einem vom Kopf in Richtung Maschinenkopf rückspringenden Arm der Parallelfeder-Anordnung und auf der Gegenseite, im Kern, die Stelleinrichtung als Stellschraube quer zur Mittelachse in den Kern geschraubt werden. Damit wird ein außerordentlich kompaktes Werkzeug ermöglicht, was bisher die Kanten der Parallelfeder-Anordnungen nicht zuließen, da sie in einem separaten Teil der Feder angeordnet waren.

Wie für sich bekannt, ist die Stellschraube mit einer Kegelfläche oder einem Kegelteil versehen, die unter Vorspannung an einem Gegenpart, einem Widerlager gemäß Stand der Technik oder nach der Erfindung an einer speziell ausgebildeten Druckschraube mit einer, zu dem Kegelteil kompatiblen Stirnfläche anliegt.

Ein so ausgebildeter Werkzeugschaft läßt noch Raum für eine Kühlmittelbohrung, die im Kern an der Stelleinrichtung vorbei geführt wird, den Schlitz durchstößt und in der Parallelfederanordnung am Kopf endet, wobei der notwendige Schlitz zwischen Parallelfederanordnung und Kern durch einen Schlauch überwunden wird. Anstelle eines Schlauches kann auch ähnlich flexibles Element eingesetzt werden.

In einer Ausführungsform ist der Stahlhalter so ausgebildet, daß er in einer Spannnut im Werkzeugkopf quer zur Mittelachse des gesamtes Werkzeuges angeordnet ist, so daß er radial verstellbar ist. Verzugsweise wird der Stahlhalter, der zum Beispiel mit einer Wendeschneidplatte versehen ist, in mindesten zwei Achsen durch entsprechende Druckschrauben festgelegt. In einer bevorzugten Ausführungsform ist eine der Schrauben so ausgebildet, daß sie den Stahl halter in zwei Achsen festlegen kann, nämlich zur Aufnahme von Kräften in horizontaler und achsialer Richtung, indem am Stahl halter eine schräge Vertiefung eingebracht wird auf die eine der Druckschrauben aufsetzt und mit entsprechender Presskraft den Stahlhalter zweiachsig fixiert.

An Stelle eines derartigen Stahlhalters kann auch vorgesehen werden, daß ein anderer Stahlhalter z.B. ein langer Meißel, wie aus dem Stand der Technik bekannt, auf die Stirnfläche des Kopfes des Werkzeugschaftes durch eine Verschraubung angebracht wird. Dabei werden vorzugsweise die rückwärtige Fläche des Stahlhalters und die Stirnfläche plan ausgebildet und der Stahlhalter mit dem Kopf durch eine Überwurfmutter auf dem Kopf, der dazu entsprechendes Gewinde aufweist, fest verschraubt. Dadurch ergibt sich eine spielfreie Verbindung. Vorzugsweise weist auch der Stahlhalter eine Kühlmittelbohrung auf und wird über die Spannnut, welche in diesem Fall nicht gebraucht wird, von der Kühlmittelflüssigkeitsleitung im Kern mit Flüssigkeit versorgt, die dann durch den Stahlhalter zur Werkzeugspitze in der Bohrung gelangen kann, um Flüssigkeitsaustritt an der Verbindungsstelle in der Überwurfmutter, die entweder einstückig am Stahlhalter angeformt ist oder als echte Überwurfmutter den Stahlhalter und den Kopf am Werkzeugschaft umgreift, mit den entsprechenden Dichtungen versehen, die durch ein Aufschrauben der Überwurfmutter gepreßt werden und damit dicht halten. Eine solche Ausführung des Stahlhalters ist insbesondere für kleine Bohrungen, die zudem tief sind, geeignet und außerdem kann bei Verwendung nur eines Werkzeugkopfes der erfindungsgemäßen Art eine breite Palette von Bohrungen, angefangen von etwa 5 mm bis zu 70 oder 80 mm hergestellt werden. In Besonderheit kann der Stahlhalter selbst auch als Bohrer ausgebildet sein, um kleine Bohrungen zu erzeugen. In diesem Fall ist allerdings keine Radialverstellung erforderlich, wenn der Bohrer als Zweischneider ausgebildet ist.

Anhand der Zeichnung eines Ausführungsbeispieles soll die Erfindung näher erläutert werden.
Es zeigen:
- Fig. 1: eine Explosivdarstellung des Werkzeugkopfes;
- Fig. 2: ein erfindungsgemäßer Werkzeugkopf nach Montage;
- Fig. 3: eine Seitenansicht des Werkzeugkopfes gemäß Fig. 2 mit strichlinierter Darstellung der Parallelfeder-Anordnung;
- Fig. 4: eine Schnitt durch die erfindungsgemäße Stelleinrichtung gemäß Schnittlage A-A in Fig.3;
- Fig. 5: eine Ausführungsform des Werkzeugschaftes allein analog zu Fig. 1.

Die Zeichnung zeigt teils schematisch ein Werkzeug etwa in Originalgröße für das Ausbohren bzw. Feinbohren eines Loches mit einem Durchmesser von etwa 35 mm. Dabei handelt es sich nur um eine exemplarische Ausführungsform. Der praktikable Durchmesser für derartige Werkzeugköpfe läßt auch Durchmesser ab etwa 10 mm zu, insbesondere wenn dabei ein langer Meißel verwendet wird.

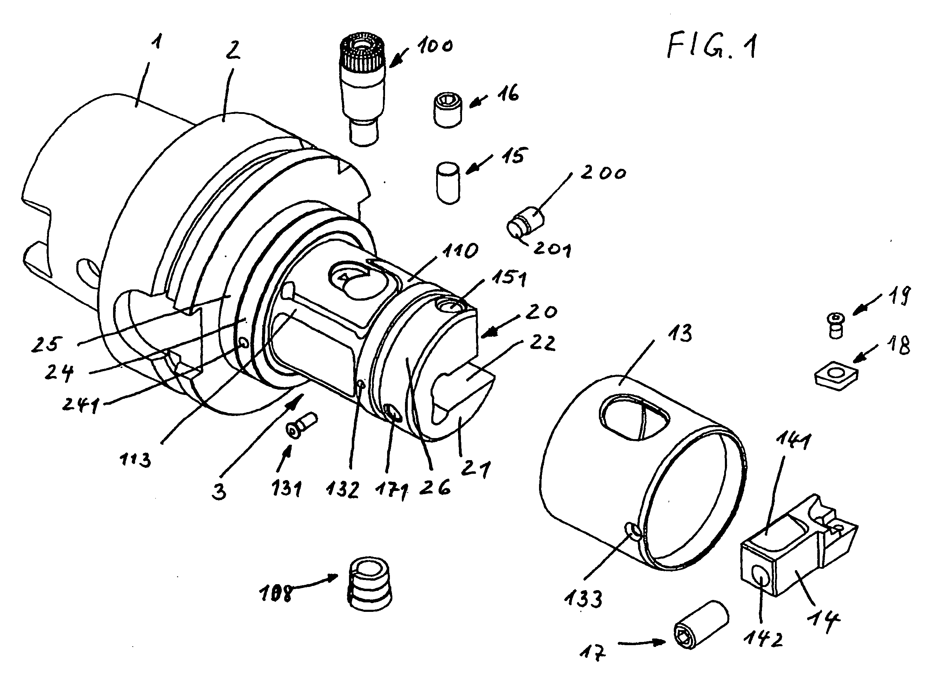

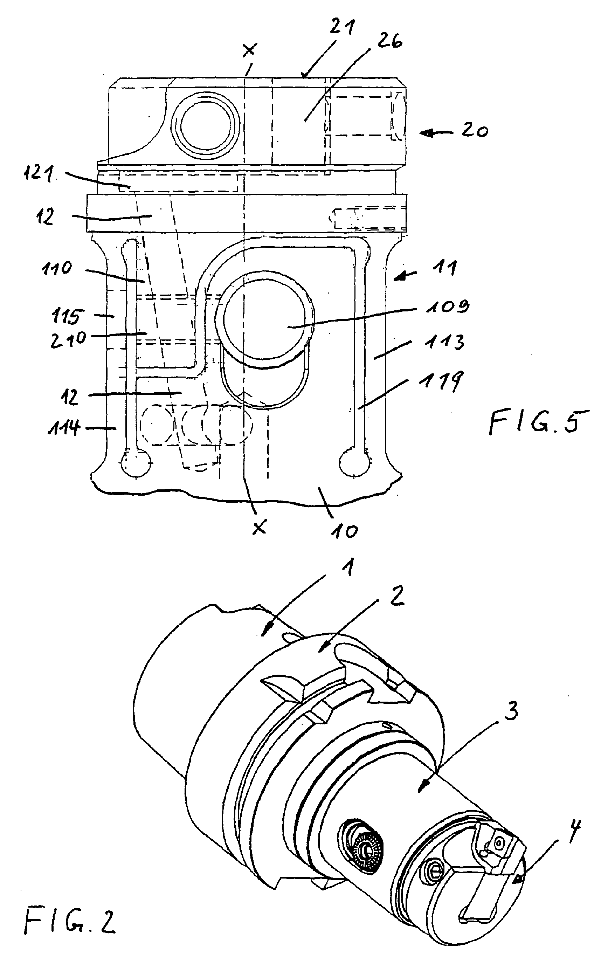

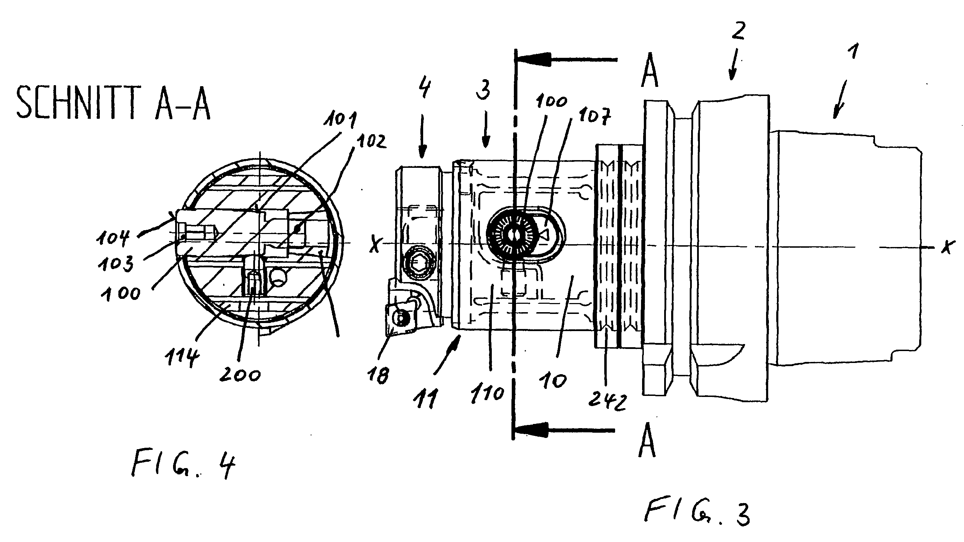

Fig. 1 zeigt in Explosivdarstellung die wesentlichen Teile des Werkzeugkopfes bzw. der an einem Werkzeugschaft, z.B. gemäß Figur 5 zu montierenden Elemente und den montierten Zustand des Werkzeugkopfes gemäß Fig. 1 in Fig. 2. Der Werkzeugkopf weist einen Maschinenschaft 1 mit beliebiger Aufnahme für eine Spindel einer Werkzeugmaschine auf und ist z.B. mit einem üblichen Ringbund 2 zum Ansatz eines Spannwerkzeuges (nicht dargestellt) für den Werkzeugkopf in der Maschine versehen. Der allgemein mit Bezugsziffer 3 bezeichnete Werkzeugschaft umfaßt einen Kern 10 (Fig. 5) und eine Parallelfeder-Anordnung 11 zur Aufnahme einer Werkzeughalterung, die allgemein mit der Bezugsziffer 4 versehen ist. Diese Werkzeughalterung umfaßt zunächst einen Stahlhalter 14, auf den mittels Befestigungsschraube 19 eine handelsübliche Wendeschneidplatte 18 befestigbar ist. Die Werkzeughalterung umfaßt des weiteren einen Kopf 20 mit Stirnfläche 21 zur Aufnahme des Stahlhalters 14, der in einer Führungsnut 22 gleiten kann, wobei er in seiner Lage fixierbar ist. Diese Fixierung geschieht durch eine Schraube 17, die in Gewindebohrung 171 des Kopfes 20 so eingebracht ist, daß mit der Schraube 17 Druck auf die der Wendeschneidplatte 18 gegenüberliegende Seite 142 des Stahlhalters 14 ausgeübt werden kann. In der anderen, dazu orthogonalen, Achse wird der Stahlhalter durch ein Druckstück 15 mittels Klemmschraube 16, die beide durch Gewindebohrung 151 einführbar sind erhalten, wobei das Druckstück 15 auf der Schrägfläche 141 im Stahlhalter 14 zur Anlage gelangt. Durch die zur Oberfläche des Stahlhalters 14 geneigte Ausformung der vertieften Fläche 141 wird der Stahlhalter sowohl in Richtung der Mittelachse X (Fig. 3) als auch in einer Horizontalrichtung in seiner Lage fixiert, während er in der zweiten Horizontalrichtung durch die an Auflagepunkt 142 anliegende Abdrückschraube 17 positionierbar ist. Der Stahlhalter wird für den entsprechenden Durchmesser vorpositioniert mit Hilfe der geschilderten Druckschrauben 16 bzw. 17. Das Teil 20 ist Kopf der Parallelfeder-Anordnung 11, welche federnde Schenkel 113, 114 aufweist, die fest mit dem Kopf 20 verbunden sind, aber eine elastische Radialverstellung des Kopfes 20 zulassen. Dazu dient eine zwischen dem Kern 10 und der Parallelfeder-Anordnung 11 angeordnete Stelleinrichtung, die primär gebildet wird aus einer Stellschraube 100 (Figur 4), die ein Kegelteil 101 und ein Gewindeteil 102 aufweist, schraubbar mit einem in Loch 103 einsetzbaren, nicht dargestellten, Werkzeug. An ihrer Kopffläche ist die Schraube mit einer Markierung 104 versehen, die gegenüber einer auf dem Kern 10 angeordneten Kerbe 107 ablesbar ist. Die Schraube 100 sitzt in einer im Kern 10 fixierten Hülse 108 mit Innengewinde und kann so quer zur Mittelachse X des Werkzeugkopfes verstellt werden. Dabei wirkt der Kegelteil 101 der Schraube auf die Stellfläche 201 der Schraube 200 ein, welche in den in Richtung Maschinenschaft 1 rückspringenden, nach Art eines steifen Tragarmes ausgebildeten Widerlagerteil 110 des Kopfes 20 eingesetzt ist, so daß sie Kontakt mit der Schraube 100 bekommen kann. Zur Einführung der Schraube 200 weist der Schenkel 114 eine Bohrung 115 auf für den Durchgriff der Schraube 200. Die Schraube 200 kann für einen bestimmten, zu erzeugenden Durchmesserbereich vorpositioniert werden.
Der Parallelfederanordnung wird so eine Vorspannung zuteil, d.h. aus der spannungsfreien neutralen Federlage herausgedrückt und werksseitig so ausgeliefert. Der Zweck ist, keine Durchmesserveränderung zuzulassen bei Einsatz von Schneideinsätzen wie Schneidplatten, bei denen die Reaktionskräfte an der Schneide auf die Schnittkräfte dazu führt, dass die Schneide sich in das Werkstück "zieht" und damit die Bohrung größer wird und Toleranzen unzulässig überschreitet.
Soll die Bohrung, die mit dem Werkzeugkopf zu erzeugen ist, geringfügig kleiner oder größer werden, so kann die Schraube 100 tiefer oder weniger tief in die Hülse 108 eingeschraubt werden und zwingt dabei die äußeren Parallelfederteile zur einer Positionsveränderung. Die Schraube 200 sitzt in einem, vom Kopf 20 ausgehenden, fliegend ausgebildeten Widerlager 110 der Parallelfeder-Anordnung 11, welches einen Querschnitt hat, der größer ist als der Querschnitt der Schenkelteile 113, 114 und sich selbst also praktisch nicht elastisch verbiegt, sondern bei entsprechendem Druck auf die Schraube 200, die Parallelfeder und damit das Werkzeug auslenkt. Durch die Anordnung der Kegelfläche 101 an der Stellschraube 100 ist so ein feinfühliges Auslenken der Parallelfeder möglich, im Bereich einer Verstellung in radialen Schritten von 1µm. Damit werden heutige Genauigkeitsanforderungen an Bohrungen in nahezu allen Fällen erfüllt.

Mit einer Staubkappe 13, die mittels Schraube 131 durch eine Bohrung 133 in der Staubkappe 13 in das Gewinde 132 am Kopf 20 geschraubt werden kann, wird vermieden, daß Schmutz in den Stellbereich bzw. den Bewegungsbereich der Parallelfeder gelangt und die Einstellung der Parallelfeder beeinträchtigt.

Der Werkzeugkopf 3 ist außerdem zum Maschinenschaft 1 bzw. Ringbund 2 in, mit zwei oder mehr Auswuchtringen 24, 25 versehen, die zum Ausgleich der ungleich verteilten Massen am Werkzeugkopf selbst mit Ausnehmung versehen sind (nicht dargestellt), die so positioniert werden können, daß die Unwucht des Werkzeugkopfes minimiert wird. Nach richtiger Einstellung werden mit Hilfe einer Schraube durch Loch 241 die Ringe in einer Spannnut 242 am Kern 10 bzw. dem Ringbund 2 in ihrer Stellung fixiert (Fig. 3). Dies so ausgestattete Werkzeug kann mit höchsten Drehzahlen bis etwa 30 000 Umdrehungen pro Minute betrieben werden und feinst tolerierte Bohrungen erzeugen.

Fig. 5 zeigt einen Werkzeugschaft, bei dem der Kern 10 mit der Parallelfeder 11 einstückig ausgebildet ist, während der Werkzeugschaft 3 gemäß Fig. 1 mit dem Maschinenschaft 1 bzw. dem Ringbund durch Verschraubung miteinander verbunden sind. In Fig. 5 ist auch der Kopf 20, welcher in einer Ausführungsform auf die Parallelfeder geschraubt werden könnte, ebenfalls als mit der Parallelfeder 11 einstückiges Teil dargestellt. Diese vergrößerte Situation zeigt in nahezu identischer Ausführung zu Fig. 1, daß das Widerlager 110, als zum Maschinenschaft 1 rückspringender Arm des Kopfes 20 und damit der Parallelfeder 11 insgesamt angeordnet ist und ein Gewindeloch 210 aufweist, in die durch ein fluchtendes Loch 115 in Schenkel 114 der Parallelfeder-Anordnung 11 die Schraube 200 (Fig. 1, 4) eingesetzt werden kann, die auf eine in Gewindeloch 109 angeordnete Stellschraube 100 (Fig. 4) trifft. Die Nut 119 separiert sowohl die Schenkel 113, 114 und das Widerlager 110 von dem Kern 10, als auch die Kühlmittelzuführung 12 im Kern 10 von der Fortsetzung der Kühlmittelbohrung 12 in der Parallelfederanordnung, welche einen Austritt 121 im Kopf knapp unterhalb des Werkzeuges hat, für eine Kühlung desselben. Die Lücke in der Kühlmittelleitung wird durch eine nicht dargestellte flexible Leitung, z.B. einen Schlauch geschlossen, damit das Kühlmittel ungehindert bis zum Kopf bzw. dem arbeitenden Werkzeug gelangen kann.

Der in Fig. 5 dargestellte Werkzeugschaft mit Kopf 20 weist keinen Werkzeughalter mit Werkzeug, z.B. eine Wendeschneidplatte 18, auf. Kopf 20 kann in alternativer Form an dem Bund 26 mit einem nicht dargestellten Gewinde versehen sein, welches komplementär zu einer, ebenfalls nicht dargestellten Überwurfmutter ausgebildet ist. Die Überwurfmutter wird vorzugsweise einstückig mit einem, auf der Stirnseite 21 des Kopfes 20 plan anlegbaren Stahlhalter gekoppelt (nicht dargestellt), an dessen Spitze bzw. äußersten Ende sich ein Werkzeugschneidplatte befinden kann. Mit einer solchen Meißelanordnung können sehr tiefe und kleine Bohrungen bearbeitet werden. Die Einstellung für entsprechend zu tolerierende Bohrungen kann, wie erläutert, mit der Schraube 200 bzw. Stelleinreichung 100 geschehen, wie dies auch am Beispiel des Werkzeughalters 14 erläutert wurde. Der Stahlhalter kann zur Durchleitung von Kühlmittel hohl sein. Die Kühlmittelbohrung endet vom Schaft her kommend am Kopf 20 in der hier funktionslosen Spannnut 22, die in der Überwurfmutter zu Kopf 20 mit einer Dichtung versehen ist. Dadurch ist es möglich durch die Kühlflüssigkeitsbohrung 12 über die Spannnut 22 Kühlmittel in den - nicht dargestellten - Stahlhalter zu bringen, der sich etwa in Mittelachse X zum Werkstück hin erstreckt. Die Dichtung kann als O-Ring ausgebildet sein, die Mutter zum Kopf bzw. die Überwurfmutter als separates Teil ausgebildet oder auch am Stahlhalter angeordnet werden. Der Stahlhalter selbst ist dazu mit seinem rückwärtigen Ende plan auf die Stirnfläche 21 des Kopfes 20 geschraubt, so daß er eine entsprechende Führung auf der Stirnfläche 21 hat und zugleich die Dichtringe preßt und somit Kühlflüssigkeit ungehindert zum Stahlhalter gelangen kann.

## Patentansprüche

1. Werkzeugkopf, insbesondere Feinbohrkopf, mit einem Maschinenschaft (1) und einem Werkzeugschaft (3), die eine gemeinsame Mittelachse (X) haben und mindestens eine Kühlmittelbohrung (12), wobei der Werkzeugschaft (3) einen steifen Kern (10) und einen von einer relativ dazu elastisch auslenkbaren Parallelfeder-Anordnung (11) getragenen Kopf (20) mit Werkzeug (14, 18) aufweist, insbesondere einen Kopf (20) mit mehreren von diesem ausgehenden, die Parallel-Federanordnung (11) bildenden Schenkeln (113, 114), von denen mindestens einer am Kern (10) oder Maschinenschaft befestigt ist, und eine Vorrichtung zur radialen Verstellung des Kopfes (20) relativ zum Kern (10), umfassend eine im Kern (10) quer zur Mittelachse (X) geführte Stelleinrichtung (100 - 104) mit Kegelteil (101), der an einem Kontaktteil (110, 201) der Parallelfeder-Anordnung (11) im Einsatzfall unter Vorspannung anliegt,
**dadurch gekennzeichnet, dass**
der Kern (10) mit der Parallel-Federanordnung (11) einstückig ausgebildet ist und das Kontaktteil in einem vom Kopf in Richtung Maschinenschaft rückspringenden Widerlager (110) ausgebildet ist.

2. Werkzeugkopf nach Anspruch 1, **dadurch gekennzeichnet, dass** die Parallelfeder-Anordnung (11) mit dem Kopf (20) einstückig ausgebildet ist.

3. Werkzeugkopf nach Anspruch 1 oder 2, **dadurch gekennzeichnet, dass** das Kontaktteil als voreinstellbare Schraube (200) der Parallelfeder-Anordnung (11) ausgebildet und die Stelleinrichtung als Stellschraube (100) quer zur Mittelachse (X) in den Kern (10) schraubbar ist.

4. Werkzeugkopf nach einem der vorhergehenden Ansprüche, **dadurch gekennzeichnet, dass** die voreinstellbare Schraube (200) mit einer Stirnfläche (201) versehen ist, die mit dem Kegelteil (101) eine Kontaktpaarung bilden kann.

5. Werkzeugkopf nach einem der vorhergehenden Ansprüche, **dadurch gekennzeichnet, dass** die Stellschraube (100) mit einer Markierung zur Anzeige ihrer Drehstellung auf ihrem sichtbaren Kopf (104) versehen ist.

6. Werkzeugkopf nach einem der vorhergehenden Ansprüche, **dadurch gekennzeichnet, dass** mindestens ein Kühlmittelkanal im Kern mit einem zugehörigen Kanal im Kopf durch einen Schlauch (112) verbunden ist.

7. Werkzeugkopf nach einem der vorhergehenden Ansprüche, **dadurch gekennzeichnet, dass** der Kopf mit einer Werkzeughalterung, umfassend eine Führungsnut (22) für eine gleitende Voreinstellung des Stahlhalters (14) sowie mindestens zwei Druckschrauben (16, 17) zur zwei- und/oder dreiachsigen Fixierung des Stahlhalters 14 versehen ist.

8. Werkzeug nach einem der Ansprüche 1 bis 6, **dadurch gekennzeichnet, dass** der Kopf (20) mit Außengewinde (26) versehen ist für eine Überwurfmutter zur Befestigung eines Stahlhalters mit rückwärtiger Planfläche auf der Stirnfläche (21), wobei nach Befestigung Planfläche und Stirnfläche eben aneinander liegen.

9. Werkzeug nach Anspruch 8, **dadurch gekennzeichnet, dass** zwischen Kopf (20) und Überwurfmutter und/oder Stahlhalter eine gegen Flüssigkeitsdurchlass wirkende Dichtung angeordnet ist.

## Claims

1. A tool head, in particular a fine drill head, comprising a machine shank (1) and a tool shank (3) having a joint centre axis (X) and at least one coolant bore (12), the tool shank (3) having a rigid core (10) and a head (20) with a tool (14, 18) carried by a parallel spring arrangement (11), which is resiliently displaceable relative thereto, in particular a head (20) with several limbs (113, 114) originating therefrom and forming the parallel spring arrangement (11), at least one of said legs being fixed to the core (10) or the machine shank, and a device for adjusting the head (20) radially relative to the core (10) comprising a positioning device (100 **-** 104) guided in the core (10) transversely to the centre axis (X) with a conical part (101), which bears against a contact part (110, 201) of the parallel spring arrangement (11) under prestress when being in use,
**characterised in that**
the core (10) with the parallel spring arrangement (11) is formed as one piece with the head and that the contact part is formed in a counter bearing (110) which is set back from the head in the direction of the machine shaft.

2. A tool head as claimed in claim 1, **characterised in that** the parallel spring arrangement (11) is formed as one piece with the head (20).

3. A tool head as claimed in claim 1 or 2, **characterised in that** the contact part is formed as a presettable screw (200) of the parallel spring arrangement (11) and the positioning device is screwable as a setting screw (100) into the core (10) transversely to the centre axis (X).

4. A tool head as claimed in one of the preceding claims, **characterised in that** the presettable screw (200) is provided with a front face (201), which may form a contact pairing with the conical part (101).

5. A tool head as claimed in one of the preceding claims, **characterised in that** the setting screw (100) is provided on its visible head (104) with a marking to indicate its rotary position.

6. A tool head as claimed in one of the preceding claims, **characterised in that** at least one coolant channel in the core is connected to an associated channel in the head by means of a tube (112).

7. A tool head as claimed in one of the preceding claims, **characterised in that** the head is provided with a tool support comprising a guide groove (22) for slidingly presetting the tool holder (14) as well as at least two pressure screws (16, 17) for a two-axis and/or three-axis fixing of the tool holder (14).

8. A tool head as claimed in one of claims 1 to 6, **characterised in that** the head (20) comprises external threads (26) for a union nut for fastening a tool holder having a plane face on the back side on the front face (21), the plane face and the front face bearing flatly against each other after fastening.

9. A tool head as claimed in claim 8, **characterised in that** a seal is arranged between the head (20) and the union nut and/or the tool holder, which is effective against the penetration of liquid.

## Revendications

1. Tête d'outil, notamment tête d'alésage, avec une tige machine (1) et une tige outil (3) ayant un même axe central (X) et au moins un trou pour un fluide de refroidissement (12), la tige outil (3) comportant un coeur rigide (10) et une tête (20) avec outil (14, 18) portée par un système de ressorts parallèle (11) à débattement élastique par rapport au coeur, notamment une tête (20) avec plusieurs jambes (113, 114) formant le système de ressorts parallèle (11) et partant de cette tête, au moins une des jambes étant fixée sur le coeur (10) ou sur la tige machine, et un dispositif de réglage radial de la tête (20) par rapport au coeur (10), comprenant un mécanisme de réglage (100 - 104) avec partie conique (101) guidée dans le coeur (10) en travers de l'axe central (X), cette partie conique étant en appui et maintenue en précontrainte contre une partie formant contact (110, 201) du système de ressorts parallèles (11) en cas d'utilisation,
**caractérisée en ce que**
le coeur (10) est réalisé d'un seul tenant avec le système de ressorts parallèles (11) et que la partie formant contact est formée dans une butée (110) s'étendant en saillie rentrante de la tête vers la tige machine.

2. Tête d'outil selon la revendication 1, **caractérisée en ce que** le système de ressorts parallèle (11) est réalisé d'un seul tenant avec la tête (20).

3. Tête d'outil selon la revendication 1 ou 2, **caractérisée en ce que** la partie formant contact est réalisée sous forme de vis (200), réglable à l'avance, du système de ressorts parallèles (11) et que le mécanisme de réglage sous forme de vis de réglage (100) est apte à être vissé dans le coeur (10) en travers de l'axe central (X).

4. Tête d'outil selon l'une quelconque des revendications précédentes, **caractérisée en ce que** la vis réglable à l'avance (200) est munie d'une surface d'extrémité (201) qui peut former un appairage de contact avec la partie conique (101).

5. Tête d'outil selon l'une quelconque des revendications précédentes, **caractérisée en ce que** la vis de réglage (100) est munie sur sa tête visible (104) d'un marquage pour indiquer sa position de rotation.

6. Tête d'outil selon l'une quelconque des revendications précédentes, **caractérisée en ce qu'**au moins un canal de fluide de refroidissement dans le coeur est relié par l'intermédiaire d'un flexible (112) à un canal associé dans la tête.

7. Tête d'outil selon l'une quelconque des revendications précédentes, **caractérisée en ce que** la tête est munie d'un porte-outil, comprenant une gorge de guidage (22) pour le préréglage glissant du support en acier (14) ainsi qu'au moins deux vis de compression (16, 17) pour fixer le support en acier (14) sur deux et/ou trois axes.

8. Outil selon l'une quelconque des revendications 1 à 6, **caractérisé en ce que** la tête (20) est munie d'un filetage extérieur (26) pour un écrou à chapeau destiné à fixer sur la face d'extrémité (21) un support en acier à la face arrière plane, la face plane et la face d'extrémité étant en appui plan après fixation.

9. Outil selon la revendication 8, **caractérisé en ce qu'**un joint d'étanchéité agissant contre le passage de liquide est interposé entre la tête (20) et l'écrou à chapeau et/ou le support en acier.
